# EUROPEAN PATENT APPLICATION

(11) **EP 0 930 492 A1**
(43) Date of publication of application: **21.07.1999**
(21) Application number: 99100559.6
(22) Date of filing: 13.01.1999
(51) Int. Cl.: G01M 3/28, F17D 5/02

(54) **Method of and apparatus for detecting leakages and/or inadvertent consumption of a fluid in a pipeline**

(30) Priority: 15.01.1998 DK 4798
(71) Applicant: Vandvagt ApS, 7700 Thisted (DK)
(72) Inventor: Moller Jensen, Torkild, 7700 Thisted (DK); Host, Klaus, 7700 Thisted (DK)
(74) Representative: Nielsen, Leif

(57) **Abstract**

The invention concerns a method and an apparatus for registering, measuring, calculating, and controlling a flow of fluid in a pipeline. The apparatus is primarily intended for a flow of water for consumption in a pipeline from a water purification plant to a household or to a number of households. The method and the apparatus are capable of interrupting the flow of fluid in the pipeline when the amount of fluid through the pipeline at a single tapping has exceeded a given maximum value, e.g. at the bursting of the pipeline or at an unnecessary high consumption of water, e.g. by sprinkling of gardens. The method and apparatus are, however, also capable of interrupting the flow of fluid in the pipeline when the flow speed of the fluid through the pipeline falls below a given minimum value while at the same time the flow amount exceeds a given value for the flow amount, e.g. by dripping taps.

## Description

The present invention relates to a method for detecting possible leakages and/or inadvertent consumption of a fluid in a pipeline with tapping places, such as a water supply pipe, the method comprising determination of values for flow speed and for flow amount of the fluid, respectively. The invention also concerns a apparatus for use by the method.

DE 32 05 697 describes a device for independently closing a water pipeline in the case of uncontrolled discharge of water by a electromagnetic shut-off valve installed between the water supply net and the consumer. Besides, in the pipeline there is installed a water counter with a rotary counter driven by the water flowing in the pipeline. The rotary counter is connected to a impulse generator with a electronic counting train connected to it which counts the number of impulses in proportion with the amount of the through-flowing water. When a preselected volume of water is achieved, the shut-off valve is activated via a relay and is closed. A corresponding device is disclosed in DK 95 000190 U3.

Each of these devices are capable of preventing an uncontrollable large amount of water from being conveyed through the pipeline. Thus the device may prevent discharge of water as a consequence of bursting, leakage, or substantial and frequent discharges of water from tapping places. This means that water damage or very high water costs are avoided. However, the device is not capable of preventing leakage taking place because of dripping taps. Dripping taps will never be registered by the device as the amount of water discharged by dripping tapping places is substantially less than the total daily amount to be registered by the device. This is a disadvantage in summer houses, public buildings, and other localities where in some periods no controlled tapping of water takes place.

GB 2 268 301 discloses a system for detecting leakage in a supply pipe. Leakage is detected by a monitoring circuit emitting a signal in the case where a registered flow speed drops under a given level for a minimum value over a given period of time. The system has basis in that the flow speed in a supply pipe sometimes will drop to zero or almost zero when no water is drawn off the supply pipe. A drop in the flow speed over the given period of time is therefore an indication of a leakage in the supply pipe below a flow detector, and a control valve will then be closed.

This system has a substantial disadvantage. It is far from the actual case that the flow speed in supply pipes drops to zero or close to zero when no tapping from the supply pipe takes place. Because of leaks in pipe connections, possible vaporisation at these leaks and other leakage depending on the general tightness of the supply pipes and not of specific leaks at the tapping places, a small flow speed will always occur. The magnitude of this flow speed is very difficult to determine as the magnitude is depending on many conditions, like the medium flowing in the supply pipes, the overall quality of the pipes, and may other conditions. Therefore, it is very difficult to determine a minimum value for the flow speed to be detected as a specific leakage at the tapping places and not as a general leak in the supply pipes.

The purpose of the present invention is to indicate a method and to provide an apparatus capable of preventing discharge of a unwanted small amount of fluid within a period of time, but independent of the flow speed of the fluid at the leakage.

This purpose is achieved by a method being peculiar in that a given value for the flow speed is determined as a least estimated flow speed by tapping fluid from the pipeline, that a given value for the flow amount is determined as a maximum allowable flow amount without tapping fluid from the pipeline, and that the flow of fluid in the pipeline is interrupted when the flow speed is below the given value for the flow speed while at the same time the flow amount exceeds the given value for the flow amount.

By not only performing a measurement of an amount of fluid conveyed through the pipeline, but also performing a measurement of a speed of the fluid, there is established a possibility of registering the occurrence of leakages with very small, but continued discharge of water, e.g. from dripping taps, while at the same time as no usual tapping takes place. A small, but continued leakage may also arise from leaky pipe connections or pipelines leaky by themselves, either on pipelines from a supplier to a consumer or at the consumer himself.

An apparatus for use by the method comprises at least one impulse meter for measuring a number of impulses over a period of time corresponding to a given flow amount in a pipeline and for measuring a frequency of impulses corresponding to a given flow speed of a fluid in the pipeline, and which apparatus is able to control opening and closing of a valve in the pipeline. The apparatus is peculiar in that the apparatus is intended to close the valve if the number of impulses over the period of time exceeds a given value for the number of impulses at the same time as the frequency of impulses is less than a given value for the frequency of impulses.

A preferred embodiment of an apparatus according to the invention is peculiar in that the given value for the number of impulses over the period of time in a counting train for the flow amount is zerofilled automatically, and wherein the given value for the frequency of impulses in a counting train for the flow speed is zerofilled automatically when the flow of fluid in the pipeline stops, if the flow amount has not exceeded the given value for the flow amount, and if the flow speed has not been less than the given value for the flow speed.

The apparatus is capable of shutting off a pipeline in the case where the pipeline has suffered breakage, where the flow speed is above a given minimum value, and where the amount of water conveyed through the pipeline is greater than a given acceptable value of the amount of water at a single tapping, but also in the case of a small leak where the amount of water is conveyed through the pipeline with a speed less than the given minimum value for tapping water over a period of time.

The apparatus may have possibility of setting different values for the given acceptable value for the amount of water, depending on whether the amount of water is to be registered and monitored in an installation in a single, common household, in an uninhabited summer house, in a building with several households, in a pipeline for a building with several households, or in a pipeline for several buildings, for industry, for offices, for farming, or for other trades.

The same apparatus in the same installation may also have setting of different values for the given acceptable value for the amount of water, e.g. in a summer house, which in periods is inhabited with a given high consumption of water and in other periods is uninhabited with a given low consumption or no consumption of water, or e.g. in households, industry, offices, and farms, where water consumption may vary greatly in the course of a day, in the course of 24 hours, in the course of a week or other periods.

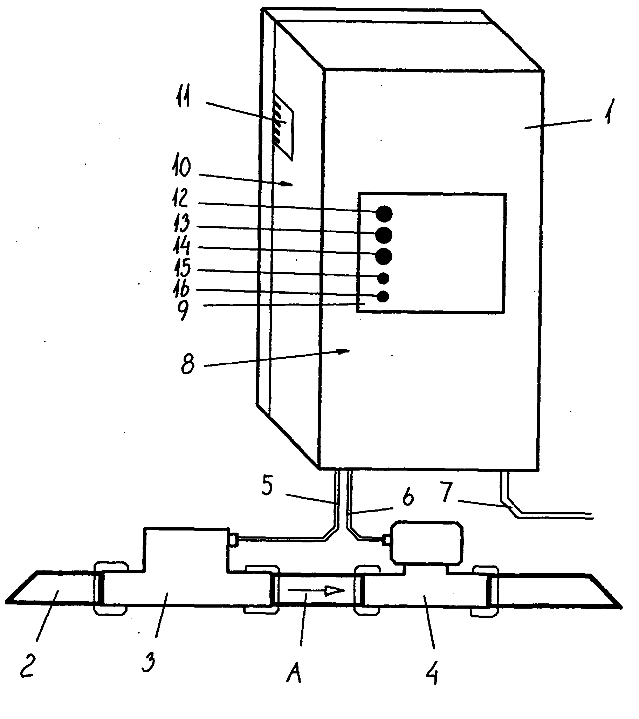

The invention will hereafter be described more closely with reference to the accompanying drawing which shows a embodiment of an apparatus according to the invention.

The apparatus comprises a box 1 containing measuring equipment in the form of a counting train (not shown) and calculating equipment (not shown) for measuring and calculating a flow of a fluid in a pipeline 2. The pipeline 2 is preferably a water pipeline for carrying water for consumption to one or more households. This will be used as a example in the following description. The apparatus may also be used for other fluids like gas or oil.

The pipeline is provided with a flow meter 3 and a electromagnetic valve 4. The flow meter 3 is disposed before the electromagnetic valve 4 relative to a direction of movement A for the water in the pipeline 4. The flow meter 3 is intended for registering a flow of water in the pipeline 2, and the electromagnetic valve is intended for opening or closing for the flow of water in the pipeline 2.

A communication cable 5 transmitting data from the flow meter 3 to the measuring and calculating equipment in the box 1 extends from the flow meter 3 to the box 1.

Likewise, a communication cable 6 transmitting message from the measuring and calculating equipment in the box 1 to the electromagnetic valve 4 extends from the box 1 to the electromagnetic valve 4. An electric wire 7, e.g. from the public electricity network, delivers current to the measuring and calculating equipment in the box 1 and possibly further on (not shown) from the box 1 to the electromagnetic valve 4.

On a front 8 of the box 1, the box is provided with a combined display and control panel 9, and on a side 10 of the box 1, the box is provided with a control panel 11. The combined display and control panel 9 on the front 8 of the box 1 is intended to show a present setting of the measuring and calculating equipment and is likewise intended to be operated in connection with zerofilling and test of the apparatus according to the invention. A first lamp 12 is intended to show that the apparatus according to the invention is in stand-by status, where the apparatus is ready to and able to perform registering, measuring, calculating, and controlling of the flow of water in the pipeline 2. A second lamp 13 is intended to show when the apparatus performs registration, measurement, calculation, and control of the flow of water in the pipeline 2. A third lamp 14 is intended to show that there is established flowstop by means of the electromagnetic valve 4. A first button 15 is intended to be operated at zerofilling the apparatus after the apparatus having performed flowstop. A second button 16 is intended to be operated when testing the apparatus.

The control panel 11 on the side 10 of the box 1 in the shown embodiment is provided with adjusting buttons 17 for setting of a determined maximum amount of water by which the apparatus according to the invention has to perform flowstop of water in the pipeline 2 because of a possible, occurring breakage of the pipeline 2. In the shown embodiment there are four adjusting buttons, e.g. a setting for flowstop at 50 l of water, a setting for flowstop at 100 l of water, a setting for flowstop at 200 l of water, and a setting for flowstop at 500 l of water. The settings may be chosen arbitrarily and may depend on different water consumption in a single household or may depend on different water consumption in different households.

The shown embodiment for the apparatus according to the invention functions in the following way. The flow meter 3 registers continually by means of an impulse meter (not shown) a number of pulsations caused by the flow of water in the pipeline 2. A single pulsation is empirically determined to be a given amount of water flowing through the pipeline 2. The number of pulsations is communicated further on to the measuring and calculating equipment in the box 1 via the communication cable 5.

The counting train measures the number of impulses and the calculating equipment calculates the total accumulated, amount of water carried through the pipeline 2, the total amount of water conveyed through the pipeline 2 at each tapping, and the flow speed of the water in the pipeline 2, respectively. Calculation of the amount of flow and of the flow speed is performed according to knowledge of the flow amount through the pipeline 2 for each pulsation. The flow amount is determined by multiplying the flow amount per impulse by the number of impulses. The flow speed is determined by dividing the flow amount by a given period of time in order thereby to determine the frequency of impulses.

The total accumulated flow amount is used for determining the total flow amount through the pipeline and thereby the total, consumption of water for the installation in question. The total flow amount of water through the pipeline at each single tapping is used for monitoring that the total flow amount at each single tapping does not exceed the maximum amount determined by means of the control panel 11 on the side 10 of the box 1.

If the total flow amount at each single tapping do not exceed the determined maximum amount, the calculating equipment will be automatically zerofilled subsequent to each tapping. If the total flow amount at each single tapping exceeds the determined maximum amount, the calculating equipment will transmit a signal to the electromagnetic valve 4 via the communication cable 6 to shut off the flow of water in the pipeline 2. Hereafter it is necessary manually to zerofill the calculating equipment by means of the first button 15 on the panel 9 on the front 8 of the box 1 after the cause of the flowstop, such as a bursting of a pipeline, has been localised and remedied.

If the flow speed has dropped below a given empirical minimum value constituting an estimated minimum value when tapping does not occur, and if the total flow amount at the same time rises above a given empirical maximum value constituting an allowable maximum value when tapping does not occur, the calculating equipment will likewise transmit signal to the electromagnetic valve 4 via the communication cable 6 to shut off the flow of water through the pipeline 2. Likewise, it is hereafter necessary to zerofill the calculating equipment manually by means of the first button 15 on the panel 9 on the front 8 of the box 1 after the cause of the flowstop, such as a dripping tap, has been localised and remedied.

The invention has been described above with reference to a specific embodiment of an apparatus according to the invention. The method described above indicates generally the method according to the invention, but the apparatus can be provided in other embodiments than shown. It will be possible to have other lamps and other adjusting buttons as well as the number of settings for the maximum allowable amount of water and the amount of the maximum allowable amounts of water may vary. The flow meter may be any kind of flow meter, mechanical as well as electronical. The electromagnetic valve may be any kind of electromagnetic valve, and also other kinds of valves may be used.

## Claims

1. A method for detecting possible leakages and/or inadvertent consumption of a fluid in a pipeline with tapping places, such as a water supply pipe, the method comprising determination of values for a flow speed and for a flow amount of the fluid, respectively**, characterised** in that a given value for the flow speed is determined as a least estimated flow speed by tapping fluid from the pipeline, that a given value for the flow amount is determined as a maximum allowable flow amount without tapping fluid from the pipeline, and that the flow of fluid in the pipeline is interrupted when the flow speed is below the given value for the flow speed while at the same time the flow amount exceeds the given value for the flow amount.

2. A method according to claim 1, **characterised** in that in a first case, when the flow speed is above the given value, the flow of fluid in the pipeline is interrupted if a first given value for the flow amount is exceeded, and that in a second case, when the flow speed is below a given value, the flow of fluid in the pipeline is interrupted if a second given value for the flow amount is exceeded.

3. A method according to claim 1 or 2, **characterised** in that the flow amount is determined by measuring a number of impulses by a impulse meter and multiplying the number by an empirical value for a volume of fluid per impulse, and wherein the flow speed is determined by the impulse meter measuring a number of impulses and dividing the number by a corresponding period of time.

4. An apparatus for use by the method according to any preceding claim and comprising at least one impulse meter for measuring a number of impulses over a period of time corresponding to a given flow amount in a pipeline (2) and for measuring a frequency of impulses corresponding to a given flow speed of a fluid in the pipeline (2), and which apparatus is able to control opening and closing of a valve (4) in the pipeline (2), **characterised** in that the apparatus is intended to close the valve (4) if the number of impulses over the period of time exceeds a given value for the number of impulses at the same time as the frequency of impulses is less than a given value for the frequency of impulses.

5. An apparatus according to claim 4, **characterised** in that the given value for the (numerical?) number of impulses over the period of time in a counting train for the flow amount is zerofilled automatically, and wherein the given value for the frequency of impulses in a counting train for the flow speed is zerofilled automatically when the flow of fluid in the pipeline stops, if the flow amount has not exceeded the given value for the flow amount, and if the flow speed has not been less than the given value for the flow speed.

6. An apparatus according to claim 4 or 5, **characterised** in that the values in the counting trains for the flow amount and for the flow speed, respectively, may be zerofilled manually if the flow amount has exceeded the given value for the flow amount and if the flow speed at the same time has been less than the given value for the flow speed, and that the flow in the pipeline therefore has been interrupted.

7. An apparatus according to any of the claims 4 - 6, **characterised** in that the value for the given value of the flow amount may be varied by choice and manual setting among several values for the flow amount.

8. An apparatus according to any of the claims 4 - 7, **characterised** in that the counting train in addition counts a value for an accumulated flow amount and wherein the value for the accumulated flow amount may be read.

9. An apparatus according to any of the claims 4 - 8, **characterised** in that the impulse counter for counting the number of impulses within a period of time and the impulse counter for counting the frequency of impulses are the same impulse counter.

10. Use of an apparatus according to any of the claims 4 - 9 for registering, measuring, calculating, and controlling the flow of water in a pipeline from a water purification plant to one or more households.
